Europäisches Patentamt

European Patent Office

Office européen des brevets

(19)

(11) **EP 1 200 927 B1**

(12) **FASCICULE DE BREVET EUROPEEN**

| | |
|---|---|
| (45) Date de publication et mention de la délivrance du brevet:<br>**11.06.2003 Bulletin 2003/24** | (51) Int Cl.⁷: **G06K 7/00** |
| (21) Numéro de dépôt: **00958604.1** | (86) Numéro de dépôt international:<br>**PCT/FR00/02129** |
| (22) Date de dépôt: **25.07.2000** | (87) Numéro de publication internationale:<br>**WO 01/009813 (08.02.2001 Gazette 2001/06)** |

(54) **LECTEUR DE CARTE A PUCE COMPRENANT UN SYSTEME D'ECONOMIE D'ENERGIE**

CHIPKARTEN-LESEGERÄT MIT ENERGIESPAREINRICHTUNG

CARD READER COMPRISING AN ENERGY-SAVING SYSTEM

(84) Etats contractants désignés:
**DE FR GB IT**

(30) Priorité: **30.07.1999 FR 9910150**

(43) Date de publication de la demande:
**02.05.2002 Bulletin 2002/18**

(73) Titulaire: **STMicroelectronics SA**
**F-92120 Montrouge (FR)**

(72) Inventeurs:
• **RUAT, Ludovic**
**F-13850 Greasque (FR)**

• **FERRAND, Olivier**
**F-13114 Puyloubier (FR)**
• **GAILHARD, Bruno**
**F-13530 Trets (FR)**

(74) Mandataire: **Marchand, André**
**OMNIPAT,**
**24 Place des Martyrs de la Résistance**
**13100 Aix-en-Provence (FR)**

(56) Documents cités:
**EP-A- 0 762 307      EP-A- 0 803 831**
**EP-A- 0 917 086      EP-A- 0 965 942**
**US-A- 5 428 252**

## Description

La présente invention concerne un lecteur de carte à puce comprenant un logement de réception d'une carte à puce, un microprocesseur, des moyens de connexion du microprocesseur à une carte à puce insérée dans le logement, et une source de tension.

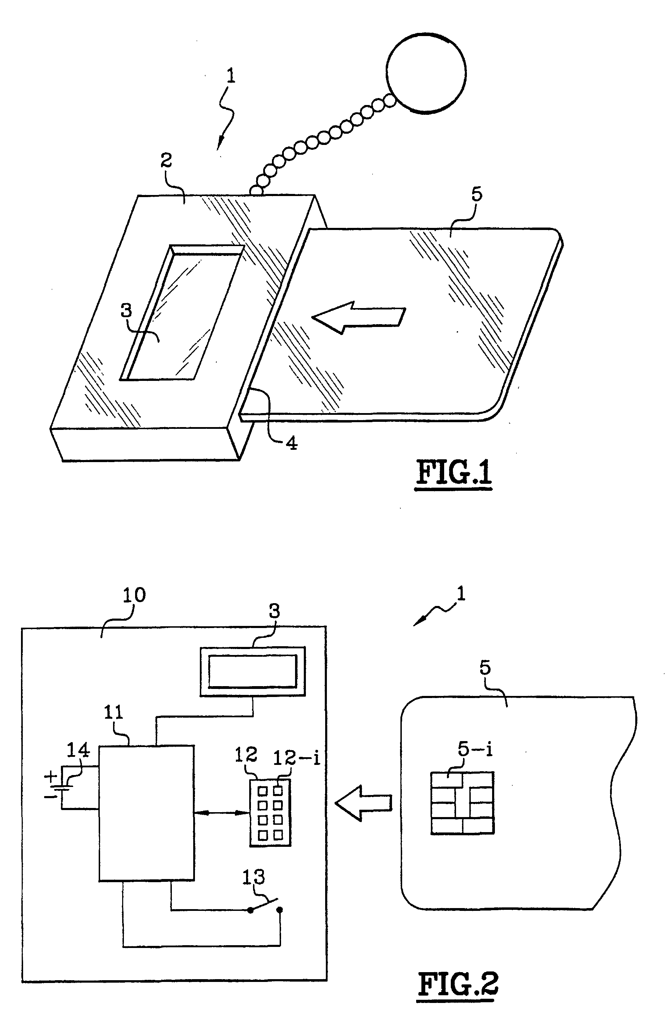

La présente invention concerne notamment mais non exclusivement les lecteurs de carte à puce appelés "visionneuses" ("viewers"), dont un exemple est représenté sur la figure 1. Comme on le voit sur cette figure, un lecteur 1 du type "visionneuse" comprend généralement un boîtier 2 de faible dimension, un afficheur 3 et une fente 4 d'introduction de carte 5. L'intérieur du boîtier 2 comporte un logement ne recevant généralement qu'une extrémité de la carte 5 en raison de sa taille réduite.

Ce type de lecteur fait l'objet de diverses applications et permet par exemple d'afficher le nombre d'unités restant dans une carte téléphonique, la quantité d'argent disponible dans une carte à puce du type porte-monnaie électronique, etc.. Il peut se présenter sous la forme d'un porte-clés, comme on le voit sur la figure 1.

Comme illustré sur la figure 2, on trouve généralement à l'intérieur d'un tel lecteur 1 une plaquette de circuit imprimé 10 sur laquelle est agencé un microprocesseur 11, l'afficheur 3, un connecteur 12 de carte à puce, un détecteur de fin de course 13 et une pile électrique 14 assurant l'alimentation électrique du microprocesseur 11.

Le microprocesseur 11 est généralement du type microcontrôleur et incorpore sur la même puce de silicium divers éléments périphériques comme un oscillateur, une mémoire-programme de type ROM, une mémoire de données de type RAM et/ou EEPROM, des circuits de pilotage de l'afficheur 3, etc.. Le connecteur 12, généralement à friction, comprend par exemple des plages métalliques 12-i agencées pour coïncider avec les plages de contact 5-i de la carte à puce 5 insérée dans le lecteur.

Le détecteur de fin de course 13 permet au microprocesseur 11 de savoir qu'une carte 5 est insérée dans le logement afin d'initialiser une communication avec la carte. Comme aucune protection n'existe dans ce type de lecteur contre les arrachements de carte, il est classique de programmer le microprocesseur pour qu'il coupe de façon "propre" une communication avec une carte, lorsque celle-ci est soudainement retirée du lecteur. Le microprocesseur dispose pour cela de quelques millisecondes pendant lesquelles les plages métalliques 12-i du connecteur 12 sont encore au contact des plages 5-i de la carte 5 (la vitesse de retrait d'une carte étant de l'ordre de 2m/s). Cette coupure "propre" d'une communication consiste par exemple, selon la norme ISO 7816, à envoyer un signal de remise à zéro (RST) à la carte.

Le fonctionnement du lecteur 1 est ainsi le suivant : en dehors des périodes d'utilisation, le microprocesseur se place de lui-même dans un état de repos (stand-by) où sa consommation est très faible. Cette consommation est typiquement de l'ordre de 1 à 10 µA selon la structure et la complexité du microprocesseur. Lorsqu'une carte 5 est insérée dans le logement et se trouve en fin de course, la fermeture du détecteur 13 déclenche une interruption dans le microprocesseur 11, qui initialise alors une communication avec la carte et affiche les informations qu'elle contient. Lorsque la carte 5 est retirée, l'ouverture du détecteur déclenche une nouvelle interruption et le microprocesseur repasse dans l'état de repos. Si le microprocesseur est encore en communication avec la carte au moment de son retrait, il interrompt la communication avec la carte avant de se placer dans l'état de repos.

Le principal inconvénient d'un tel lecteur est de présenter une consommation de courant non nulle en dehors des périodes d'utilisation, et une durée de vie de la pile limitée. En effet, le temps d'utilisation du lecteur étant négligeable devant les périodes de repos, la consommation du microprocesseur à l'état de repos, bien que minime, a une influence non négligeable sur la durée de vie de la pile.

On connaît déjà par EP 0 762 307 un lecteur de carte à puce comprenant un système de coupure de l'alimentation électrique du lecteur lorsqu'une carte à puce est retirée du lecteur. Ce système comprend un interrupteur détecteur de présence de carte à puce, qui délivre un signal actif à un circuit assurant l'alimentation en tension du lecteur, lequel cesse de délivrer l'alimentation électrique au lecteur lorsque ce signal est émis. Ce système nécessite un certain degré de complexité pour que le circuit d'alimentation réagisse au signal actif délivré par le détecteur de carte.

On connaît également par US 5 428 252 un microprocesseur pourvu d'un système de détection de baisses de tension d'alimentation, la tension d'alimentation étant fournie par une pile, le système de détection délivrant un signal d'interruption en cas de baisse importante de la tension d'alimentation, le signal d'interruption permettant au microprocesseur de sauver des données avant de basculer dans un mode sommeil.

Par ailleurs EP 0 803 831 décrit un lecteur de carte à puce comprenant deux moyens interrupteurs, l'un servant à activer le lecteur lorsqu'une carte y est insérée et l'autre servant à détecter un retrait de carte pour permettre au lecteur de finir une transaction en cours.

Un objectif de la présente invention est de prévoir un moyen simple et peu coûteux pour supprimer la consommation d'un microprocesseur présent dans un lecteur de carte à puce, lorsque aucune carte n'est présente dans le lecteur.

Un autre objectif de la présente invention est de prévoir un tel moyen tout en conservant la possibilité d'interrompre proprement une communication avec une carte à puce en cas de retrait brutal de la carte.

Cet objectif est atteint par la prévision d'un lecteur de carte à puce comprenant un logement de réception d'une carte à puce, un microprocesseur, des moyens de connexion du microprocesseur à une carte à puce insérée dans le logement, une source de tension, et des moyens pour ne pas délivrer au microprocesseur la tension fournie par la source de tension lorsque aucune carte à puce ne se trouve dans le logement, dans lequel les moyens pour ne pas délivrer au microprocesseur la tension fournie par la source de tension comprennent un premier moyen interrupteur du type normalement ouvert, interposé entre la source de tension et une borne d'alimentation du microprocesseur, ledit moyen interrupteur étant agencé pour se fermer lorsqu'une carte se trouve en fin de course dans le logement et s'ouvrir lorsque la carte n'est plus en fin de course dans le logement.

Selon un mode de réalisation, le microprocesseur comprend des moyens pour détecter l'ouverture du moyen interrupteur, des moyens pour mettre fin à une communication avec une carte à puce en cas d'ouverture du moyen interrupteur au cours d'une telle communication, et un condensateur pour maintenir la tension d'alimentation du microprocesseur au-dessus d'un seuil déterminé lorsque le moyen interrupteur passe de l'état fermé à l'état ouvert, au moins pendant le temps nécessaire au microprocesseur pour mettre fin à une communication en cours.

Selon un mode de réalisation, les moyens pour détecter l'ouverture du moyen interrupteur comprennent un comparateur agencé pour comparer la tension d'alimentation du microprocesseur avec une tension de référence.

Selon un mode de réalisation, la tension de référence est générée au moyen de la tension délivrée par la source de tension, sans passer par le moyen interrupteur.

Selon un mode de réalisation, la tension de référence est délivrée par un diviseur de tension alimenté par la source de tension.

Selon un mode de réalisation, le diviseur de tension est connecté à la masse par un interrupteur se trouvant dans l'état ouvert lorsque le microprocesseur n'est pas alimenté.

Selon un mode de réalisation, les moyens pour mettre fin à une communication comprennent des moyens pour générer un signal d'interruption lorsque la sortie du comparateur change de valeur suite à l'ouverture du moyen interrupteur.

Selon un mode de réalisation, les moyens pour détecter une ouverture du premier moyen interrupteur comprennent un deuxième moyen interrupteur agencé pour se fermer lorsqu'une carte est en fin de course dans le logement et s'ouvrir lorsque la carte n'est plus en fin de course dans le logement.

Selon un mode de réalisation, le deuxième moyen interrupteur a une première borne connectée à la source de tension, la deuxième borne étant surveillée par le microprocesseur.

Selon un mode de réalisation, les moyens pour mettre fin à une communication comprennent des moyens pour générer un signal d'interruption lorsque le deuxième moyen interrupteur passe de l'état fermé à l'état ouvert.

Selon un mode de réalisation, le comparateur comporte deux branches d'entrée comprenant chacune au moins un transistor ballast et un transistor de commande pour recevoir la tension d'alimentation et la tension de référence susmentionnées, et comprend un transistor ballast supplémentaire connecté en parallèle avec un transistor ballast de l'une des branches d'entrée, des moyens pour connecter l'entrée de commande du transistor ballast supplémentaire aux entrées de commande des autres transistors ballast lorsque la tension de sortie du comparateur est dans un premier état, et des moyens pour bloquer le transistor ballast supplémentaire lorsque la tension de sortie du comparateur est dans un second état, de telle sorte que le comparateur présente une hystérésis de commutation fonction de l'état de sa sortie.

Selon un mode de réalisation, le comparateur comprend en outre des moyens pour rendre passant le transistor ballast supplémentaire pendant une période de transition où la tension de sortie du comparateur passe du second état au premier état.

Selon un mode de réalisation, le comparateur comprend en outre des moyens pour bloquer les transistors ballast pendant une période de transition où la tension de sortie du comparateur passe du premier état au second état.

Selon un mode de réalisation, les moyens pour bloquer ou pour rendre passant le transistor ballast supplémentaire pendant une période de transition comprennent des moyens pour retarder pendant la période de transition l'application au transistor ballast supplémentaire de signaux de commande qui dépendent du nouvel état de la sortie du comparateur.

Ces objets, caractéristiques et avantages de la présente invention seront exposés plus en détail dans la description suivante de deux exemples de réalisation d'un lecteur de carte à puce selon l'invention, faite à titre non limitatif en relation avec les figures ci-jointes parmi lesquelles :

- la figure 1 précédemment décrite est une vue externe d'un lecteur de carte à puce du type "visionneuse",
- la figure 2 précédemment décrite est le schéma électrique du lecteur de carte de la figure 1,
- la figure 3 est le schéma électrique d'un premier mode de réalisation d'un lecteur de carte à puce comprenant un système d'économie d'énergie selon l'invention,
- les figures 4A à 4F représentent divers signaux électriques et illustrent le fonctionnement du lecteur de la figure 3,
- la figure 5 est le schéma électrique d'un deuxième mode de réalisation d'un lecteur de carte à puce selon l'invention,

- la figure 6 est le schéma électrique d'un comparateur classique,
- la figure 7 est le schéma électrique d'un comparateur à hystérésis selon l'invention, et
- la figure 8 est le schéma électrique d'un comparateur à hystérésis selon l'invention.

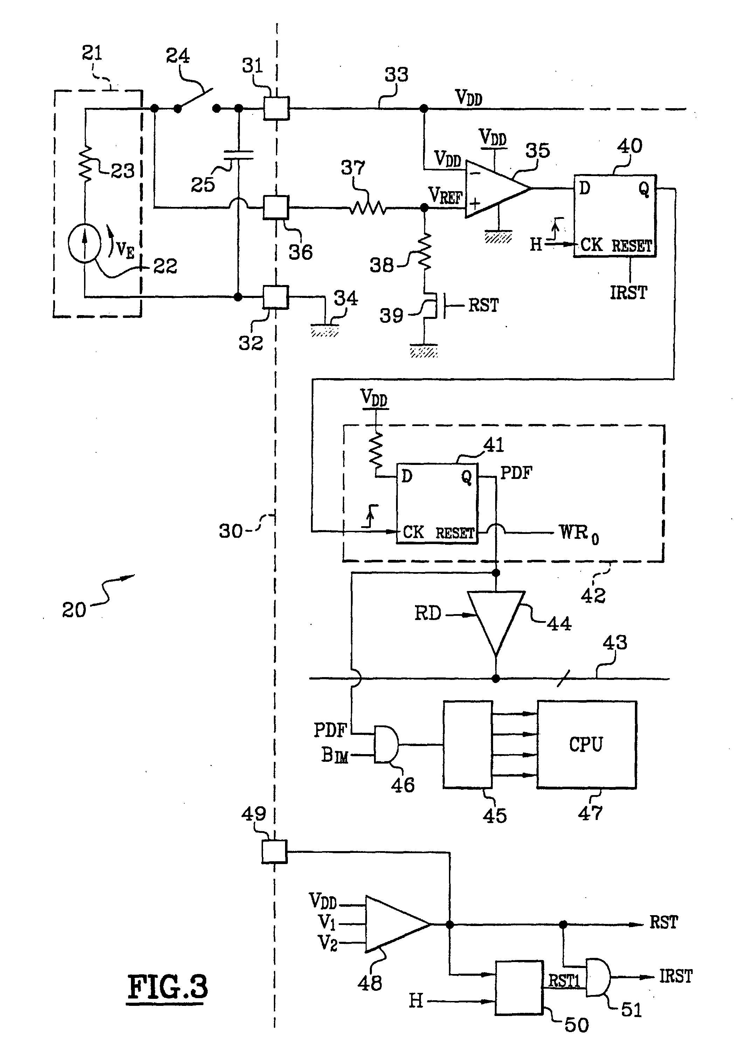

La figure 3 représente le schéma électrique d'un lecteur 20 de carte à puce comportant un système d'économie d'énergie selon l'invention. La structure générale du lecteur 20 est conforme à celle du lecteur classique 1 représenté sur la figure 1. Ainsi, le lecteur 20 comprend essentiellement un boîtier comportant un logement de réception de carte (non représenté), une pile électrique 21, un microprocesseur 30, ainsi qu'un afficheur et un connecteur de carte qui ne sont pas représentés dans un souci de simplicité. D'autres éléments périphériques, notamment un clavier, peuvent également être prévus en fonction des besoins de l'application visée.

La partie droite de la figure 3, délimitée par un trait pointillé, représente des éléments du système d'économie d'énergie selon l'invention qui sont incorporés dans le microprocesseur 30 pour des raisons pratiques, ainsi que les principaux éléments matériels du microprocesseur 30 intervenant dans le fonctionnement du système. Les autres éléments du microprocesseur 30 ne sont pas représentés pour des raisons de simplicité, ainsi que les éléments périphériques comme le plan mémoire et les pilotes de l'afficheur.

Le microprocesseur 30 comprend de façon classique une borne d'alimentation 31 et une borne de masse 32, connectées respectivement à une ligne d'alimentation interne 33 et à un plan de masse 34. A l'extérieur du microprocesseur, les bornes 31, 32 sont connectées respectivement à l'anode et la cathode de la pile électrique 21. La pile 21 est représentée par son schéma équivalent, comprenant un générateur parfait 22 délivrant une tension $V_E$ et une résistance série 23 (résistance interne de la pile).

Selon un premier aspect de l'invention, la borne d'alimentation 31 du microprocesseur est connectée à l'anode de la pile 21 par l'intermédiaire d'un interrupteur de fin de course 24, du type normalement ouvert en l'absence de carte à puce. L'interrupteur 24 est de tout type connu, par exemple à lame souple ou à bouton poussoir.

Ainsi, le microprocesseur 30 n'est alimenté qu'à la condition qu'une carte soit insérée dans le lecteur et soit correctement enfoncée dans son logement. Dans ces conditions, l'interrupteur 24 est fermé et le microprocesseur reçoit une tension d'alimentation $V_{DD}$ sensiblement égale à la tension $V_E$, sauf en cas de forte consommation de courant. Lorsque la carte est retirée du logement, ou commence à être retirée, l'interrupteur 24 s'ouvre et le microprocesseur 30 n'est plus alimenté. Le lecteur de carte selon l'invention présente ainsi une consommation de courant nulle en dehors des périodes d'utilisation et offre une durée de vie de la pile maximale (ou un temps de décharge optimal dans le cas d'une pile rechargeable).

Le lecteur 20 comprend également un condensateur 25, de préférence externe au microprocesseur 30, connecté entre la borne d'alimentation 31 et la borne de masse 32. Le condensateur 25 permet d'appliquer progressivement la tension $V_{DD}$ au microprocesseur 30 à la fermeture de l'interrupteur 24. A l'ouverture de l'interrupteur 24, il maintient la tension $V_{DD}$ pendant quelques millisecondes ou dizaines de millisecondes au-dessus d'un seuil de tension V2 en dessous duquel le microprocesseur 30 cesse de fonctionner, comme cela sera vu plus loin.

Selon l'invention, le microprocesseur 30 comprend également des moyens de détection de l'ouverture de l'interrupteur 24, et des moyens pour interrompre "proprement" une communication avec une carte à puce en cas de retrait de la carte pendant une telle communication.

**Premier mode de réalisation des moyens de détection**

Sur la figure 3, les moyens de détection prennent la forme d'un comparateur 35 dont l'entrée négative est connectée à la borne d'alimentation 31 et reçoit la tension d'alimentation $V_{DD}$. L'entrée positive du comparateur 35 reçoit une tension de référence $V_{REF}$. Avantageusement, la tension de référence $V_{REF}$ est produite au moyen de la tension $V_E$ sans passer par l'interrupteur 24, grâce à une borne spéciale 36 du microprocesseur connectée directement à l'anode de la pile 21. Ici, la tension de référence $V_{REF}$ est prélevée au point milieu d'un pont diviseur de tension comprenant deux résistances 37, 38. La résistance 37 est connectée à la borne 36 et la résistance 38 est connectée à la masse par l'intermédiaire d'un interrupteur 39, par exemple un transistor MOS. L'interrupteur 39 est piloté par un signal RST de remise à zéro du microprocesseur, décrit plus loin.

La sortie du comparateur 35 est appliquée sur l'entrée D d'une bascule D synchrone 40. L'entrée d'horloge CK de la bascule 40 reçoit le signal d'horloge H du microprocesseur et l'entrée RESET reçoit un signal IRST. La sortie Q de la bascule 40 est appliquée sur l'entrée d'horloge CK d'une deuxième bascule D synchrone 41. L'entrée D de la bascule 41 est maintenue en permanence à 1 (tension $V_{DD}$) et l'entrée RESET reçoit un signal WR0 (écriture d'un zéro). La sortie Q de la bascule 41 délivre un bit ou "drapeau" PDF ("Power Down Flag") permettant au microprocesseur de savoir qu'une coupure de tension est en train de se produire, suite à l'ouverture de l'interrupteur 24. La bascule 41 est ici une cellule d'un registre de drapeaux 42 ("Flag Register"), et le drapeau PDF peut être envoyé sur le bus de données 43 du microprocesseur par l'intermédiaire d'un tampon trois états 44 ("buffer tristate") commandé par un signal de lecture RD. Le drapeau PDF est également appliqué sur une entrée d'un décodeur d'interruption 45 par l'intermédiaire d'une porte ET 46 recevant sur son autre entrée un bit $B_{IM}$ de masquage d'interruption.

Lorsque le drapeau PDF est à 1 et que la porte ET est transparente (bit $B_{IM}$ à 1), le décodeur d'interruption 45 délivre à l'unité centrale 47 (CPU) du microprocesseur un vecteur d'interruption donnant l'adresse d'un sous-programme en soi classique, contenant les instructions nécessaires pour interrompre une communication en cours avec une carte à puce.

D'autres éléments du microprocesseur 30 intervenant dans le fonctionnement du système selon l'invention sont représentés au bas de la figure 3. On distingue un détecteur 48 de basse tension à hystérésis classique ("Low Voltage Detector") recevant en entrée la tension d'alimentation $V_{DD}$ et deux tensions de référence V1, V2. La sortie du détecteur 48 délivre le signal RST de remise à zéro du microprocesseur et est accessible par une borne 49 pour les remises à zéro externes. La sortie du détecteur 48 est appliquée à l'entrée d'un circuit à retard 50, par exemple un compteur piloté par le signal d'horloge H. Lorsque le signal RST passe à 1, le circuit à retard 50 délivre un signal RST1 à 1 avec un décalage correspondant à un nombre de cycles d'horloge déterminé. Les signaux RST et RST1 sont combinés dans une porte ET 51 dont la sortie délivre un signal IRST de remise à zéro interne du microprocesseur, bien connu de l'homme de l'art.

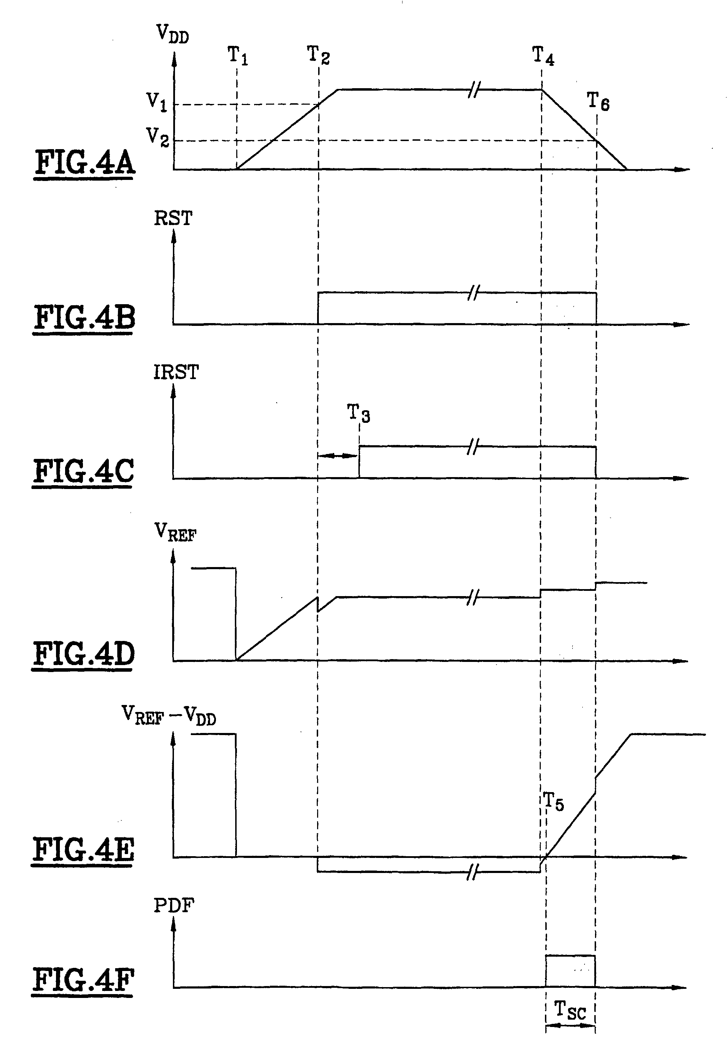

Le fonctionnement du lecteur 20 selon l'invention sera maintenant décrit en relation avec les figures 4A à 4F, qui représentent respectivement la courbe de la tension d'alimentation $V_{DD}$, le chronogramme du signal RST, le chronogramme du signal IRST, la courbe de la tension $V_{REF}$, la courbe de la tension différentielle $V_{REF}$-$V_{DD}$ appliquée au comparateur 35 et le chronogramme du drapeau PDF.

Lors de l'insertion d'une carte à puce, l'interrupteur 24 se ferme à un instant T1. La tension $V_{DD}$ monte lentement (fig. 4A) du fait de la charge du condensateur 25. Simultanément, la tension $V_{REF}$ passe à 0 et suit la croissance de la tension $V_{DD}$ (fig. 4B). A un instant T2, la tension $V_{DD}$ atteint le seuil V1 et le détecteur 48 met le signal RST à 1 (fig. 4B). L'interrupteur 39 devient passant (fig. 3), le pont diviseur 37, 38 devient conducteur et la tension $V_{REF}$ s'abaisse sensiblement (fig. 4D). La tension différentielle $V_{REF}$-$V_{DD}$ devient inférieure à 0 (fig. 4E) et la sortie du comparateur 35 est maintenue à 0. A un instant T3 intervenant quelques coups d'horloge H après le passage à 1 du signal RST, le circuit 50 met le signal RST1 à 1 et le signal IRST de remise à zéro interne passe à 1 (fig. 4C). Cet instant T3 correspond à la mise en service effective de tous les éléments du microprocesseur 30, qui va alors exécuter une procédure d'interrogation et de lecture de carte à puce en soi classique.

Par comparaison avec l'art antérieur, on voit que c'est la mise sous tension du microprocesseur qui déclenche une communication avec une carte à puce, et non une interruption générée par la fermeture d'un interrupteur de fin de course.

Supposons maintenant que la carte est retirée soudainement de son logement à un instant T4, alors que la communication entre le microprocesseur et la carte n'est pas terminée. L'interrupteur 24 s'ouvre et la tension d'alimentation $V_{DD}$ commence à décroître lentement (fig. 4A) du fait de la décharge du condensateur 25. Egalement, la tension de référence $V_{REF}$ augmente sensiblement du fait que le microprocesseur 30 ne consomme plus le courant délivré par la pile 21.

A un instant T5 très proche de l'instant T4, la tension $V_{DD}$ devient inférieure à la tension $V_{REF}$ et la tension différentielle $V_{REF}$-$V_{DD}$ devient positive (fig. 4E). En référence à la figure 3, la sortie du comparateur 35 passe ainsi à 1. Au premier coup d'horloge H suivant, la sortie Q de la bascule 40 passe à 1 et active l'entrée d'horloge CK de la bascule 41, dont la sortie Q (drapeau PDF) passe également à 1. En supposant que le bit $B_{IM}$ a été mis à 1 au commencement de la communication avec la carte, le drapeau PDF est transmis à l'entrée du décodeur d'interruption 45. Ce dernier aiguille alors le microprocesseur dans le sous-programme d'interruption de communication mentionné plus haut.

Si l'on se réfère à nouveau aux figures 4A à 4F, on voit que le microprocesseur cesse de fonctionner à un instant T6, lorsque la tension $V_{DD}$ atteint le seuil V2. A cet instant, le détecteur 48 met le signal RST à 0 et le signal IRST passe également à 0. L'intervalle de temps $T_{SC}$ s'écoulant entre les instants T5 et T6, pendant lequel le drapeau PDF est à 1 (fig. 4F), détermine ainsi la durée dont dispose le microprocesseur pour interrompre une communication en cours avec une carte à puce. En pratique, il est à la portée de l'homme de l'art de faire en sorte que cet intervalle de temps soit au moins égal au temps de frottement des plages de contact de la carte sur le connecteur du lecteur 20.

**Deuxième mode de réalisation des moyens de détection**

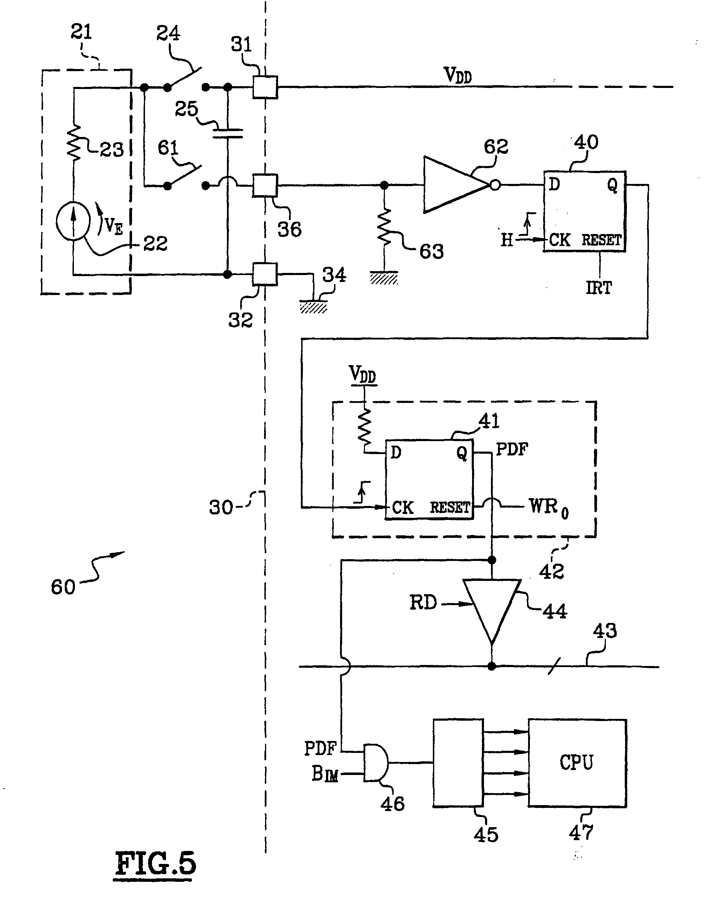

Le lecteur 60 représenté sur la figure 5 comprend des moyens de détection de l'ouverture de l'interrupteur 24 sensiblement différents. Le comparateur recevant la tension de référence $V_{REF}$ est supprimé. La borne 36 du microprocesseur 30 est connectée à l'anode de la pile 21 par un deuxième interrupteur 61 de fin de course, qui s'ouvre et se ferme au même moment que l'interrupteur 24 (l'interrupteur 61 est par exemple placé à côté de l'interrupteur 24 dans le logement de réception de carte). La borne 36 est connectée à l'entrée D de la bascule 40 par l'intermédiaire d'un circuit inverseur 62 comme une porte inverseuse ou un déclencheur ("trigger") à hystérésis. Lorsque l'interrupteur 61 est ouvert, l'entrée du circuit inverseur 62 est maintenue à l'état bas par une résistance 63 de très forte valeur connectée à la masse. Hormis ces différences, les autres éléments du lecteur 60 sont identiques à ceux du lecteur 20 de la figure 3 et ne seront pas à nouveau décrits.

Ainsi, à l'ouverture de l'interrupteur 61, la sortie du circuit inverseur 62 passe à 1. La sortie Q de la bascule 40 passe à 1 au premier coup d'horloge H suivant, entraînant le passage à 1 du drapeau PDF à la sortie de la bascule 41, et le déclenchement d'une interruption envoyant le microprocesseur dans le sous-programme susmentionné.

Il apparaîtra clairement à l'homme de l'art que la présente invention est susceptible de diverses autres variantes et modes de réalisation. Bien que l'invention ait été conçue pour répondre à un besoin d'économie d'énergie dans les petits lecteurs du type "visionneuse" alimentés par une pile, l'invention n'en demeure pas moins applicable à tout type de lecteur. Egalement, il sera noté que la présente invention est applicable à des lecteurs de carte à puce sans contact, notamment les lecteurs sans contact dit "de proximité". En pratique, les lecteurs sans contact de proximité nécessitent l'insertion d'une carte dans un logement et se distinguent simplement des lecteurs à contact par le fait que les moyens de connexion du microprocesseur à la carte prennent la forme d'une interface à couplage inductif utilisant une bobine d'antenne, au lieu de prendre la forme d'un connecteur à friction. Dans la présente demande et les revendications, le terme "moyens de connexion" ne sera donc pas interprété de façon restrictive.

**Exemples de réalisation d'un comparateur**

Le premier mode de réalisation de l'invention décrit plus haut en relation avec la figure 3 fait intervenir un comparateur 35 pour détecter une chute de la tension d'alimentation $V_{DD}$ sous le seuil $V_{REF}$.

Ce comparateur 35 doit offrir des caractéristiques que ne présentent pas les comparateurs classiques, notamment une bonne stabilité de sa tension de sortie. Il faut éviter que la sortie du comparateur oscille entre 0 et 1 quand la tension $V_{DD}$ se rapproche lentement de la tension $V_{REF}$ après l'ouverture de l'interrupteur 24.

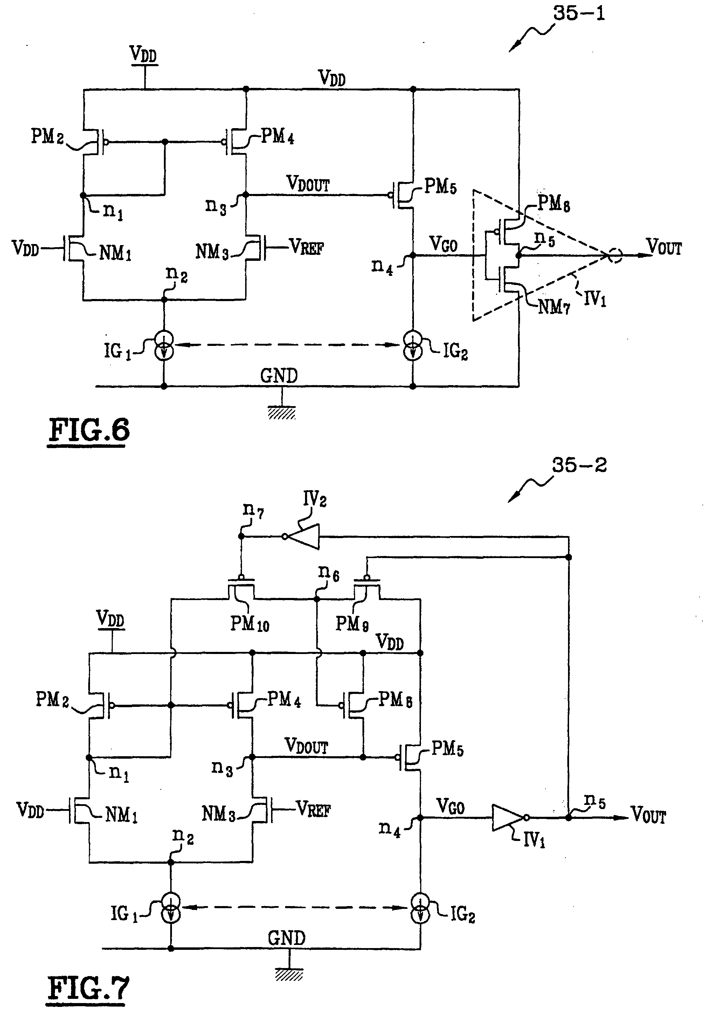

Les figures 6, 7 et 8 représentent respectivement le schéma électrique d'un comparateur classique 35-1, le schéma électrique d'un comparateur à hystérésis 35-2 et le schéma électrique d'un mode de réalisation préféré d'un comparateur à hystérésis 35-3 selon l'invention.

Les tableaux 1, 2 et 3 ci-après décrivent la structure des comparateurs 35-1, 35-2, 35-3 en indiquant leurs éléments constitutifs et les interconnexions de ces éléments. Les éléments référencés $NM_i$ sont des transistors NMOS et les éléments référencés $PM_i$ sont des transistors PMOS. Les éléments référencés $n_i$ sont des noeuds d'interconnexion et les éléments $IG_1$, $IG2$ sont des générateurs de courant agencés en miroirs de courant. Les éléments référencés $IV_i$ sont des portes inverseuses. Les transistors NM7 et PM8 forment une porte inverseuse IV1 délivrant la tension de sortie $V_{OUT}$ du comparateur.

On trouve dans les trois comparateurs une même structure de base comprenant un étage d'entrée et un transistor de sortie PM5 attaquant l'entrée de la porte inverseuse IV1. L'étage d'entrée comprend deux branches comportant chacune un transistor ballast PM2, PM4 et un transistor de commande NM1, NM3.

Dans le comparateur classique 35-1 de la figure 6, les transistors PM2 et PM4 ont le même rapport W/L (largeur sur longueur de grille). Ce comparateur présente l'inconvénient d'être instable lorsque la tension $V_{DD}$ diminue et se rapproche de la tension $V_{REF}$. Dans. ce cas, les deux branches d'entrée se trouvent en effet équilibrées et la tension $V_{DOUT}$ qui commande le transistor de sortie PM5 est susceptible d'osciller.

## Tableau 1 : comparateur 35-1 (fig. 6)

| Transistors | Source | Drain | Grille |
|---|---|---|---|
| NM1 | n1 | n2 | $V_{DD}$ |
| PM2 | $V_{DD}$ | n1 | n1 |
| NM3 | n3 / $V_{DOUT}$ | n2 | $V_{REF}$ |
| PM4 | $V_{DD}$ | n3 / $V_{DOUT}$ | n1 |
| PM5 | $V_{DD}$ | n4 / $V_{GO}$ | n3 / $V_{DOUT}$ |
| PM6 | $V_{DD}$ | n5 / $V_{OUT}$ | n4 / $V_{GO}$ |
| NM7 | n5 | GND (masse) | n4 / $V_{GO}$ |
| **Autres éléments** | **Entrée** | **Sortie** | |
| IG1 | n2 | GND | |
| IG2 | n4 | GND | |
| IV1 (NM7+PM8) | n4 | n5 / $V_{OUT}$ | |

## Tableau 2 : comparateur 35-2 (fig. 7)

| Transistors | Source | Drain | Grille |
|---|---|---|---|
| NM1 | n1 | n2 | $V_{DD}$ |
| PM2 | $V_{DD}$ | n1 | n1 |
| NM3 | n3 / $V_{DOUT}$ | n2 | $V_{REF}$ |
| PM4 | $V_{DD}$ | n3 / $V_{DOUT}$ | n1 |
| PM5 | $V_{DD}$ | n4 / $V_{GO}$ | n3 / $V_{DOUT}$ |
| PM6 | $V_{DD}$ | n5 / $V_{OUT}$ | n4 / $V_{GO}$ |
| NM7 | n5 | GND (masse) | n4 / $V_{GO}$ |
| PM8 | $V_{DD}$ | n3 / $V_{DOUT}$ | n6 |
| PM9 | $V_{DD}$ | n6 | n5 / $V_{OUT}$ |
| PM10 | n6 | n1 | n7 / NON $V_{OUT}$ |
| **Autres éléments** | **Entrée** | **Sortie** | |
| IG1 | n2 | GND | |
| IG2 | n4 | GND | |
| IV1 (NM7+PM8) | n4 | n5 / $V_{OUT}$ | |
| IV2 | n5 / $V_{OUT}$ | n7 | |

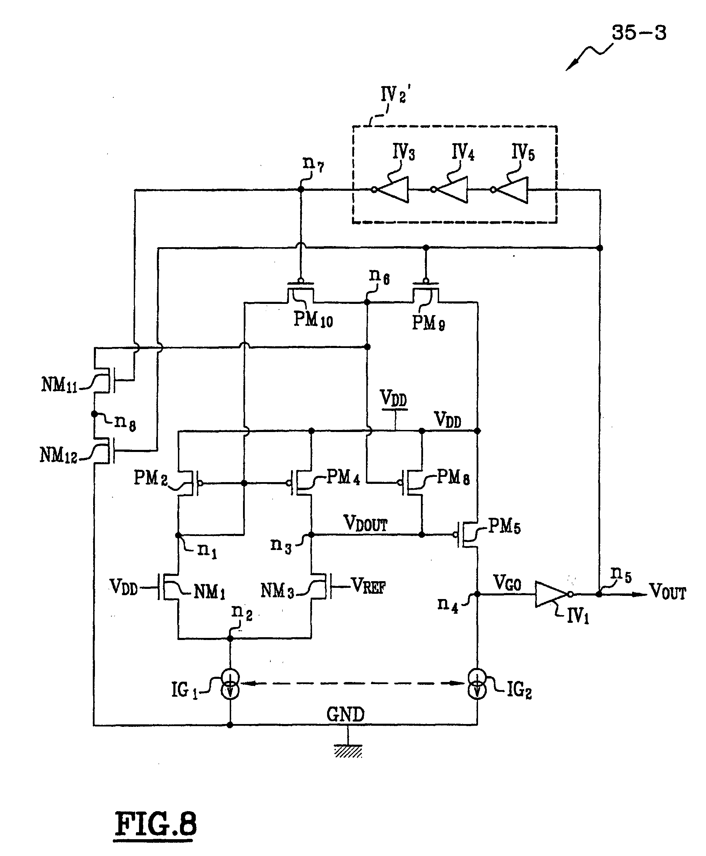

**Tableau 3 : comparateur 35-3 (fig. 8)**

| Transistors | Source | Drain | Grille |
|---|---|---|---|
| NM1 | n1 | n2 | $V_{DD}$ |
| PM2 | $V_{DD}$ | n1 | n1 |
| NM3 | n3 / $V_{DOUT}$ | n2 | $V_{REF}$ |
| PM4 | $V_{DD}$ | n3 / $V_{DOUT}$ | n1 |
| PM5 | $V_{DD}$ | n4 / $V_{GO}$ | n3 / $V_{DOUT}$ |
| PM6 | $V_{DD}$ | n5 / $V_{OUT}$ | n4 / $V_{GO}$ |
| NM7 | n5 | GND (masse) | n4 / $V_{GO}$ |
| PM8 | $V_{DD}$ | n3 / $V_{DOUT}$ | n6 |
| PM9 | $V_{DD}$ | n6 | n5 / $V_{OUT}$ |
| PM10 | n6 | n1 | n7 / NON $V_{OUT}$ |
| NM11 | n6 | n8 | n7 / NON $V_{OUT}$ |
| NM12 | n8 | GND | n5 / $V_{OUT}$ |
| **Autres éléments** | **Entrée** | **Sortie** | |
| IG1 | n2 | GND | |
| IG2 | n4 | GND | |
| IV1 (NM7+PM8) | n4 | n5 / $V_{OUT}$ | |
| IV2' | n5 / $V_{OUT}$ | n7 | |

Dans le comparateur 35-2 de la figure 7, le transistor ballast PM8 est ajouté en parallèle avec le transistor ballast PM4 de la deuxième branche. Les transistors PM2, PM4 et PM8 sont conçus de manière que leurs largeurs de grilles respectives W2, W4 et W8 répondent à la relation suivante :

$$(1) \qquad W2 = W4 + W8$$

En conséquence, la tension différentielle devant être appliquée à l'entrée du comparateur pour équilibrer ses deux branches d'entrée est différente selon que la sortie $V_{OUT}$ passe de $V_{DD}$ à 0 ou de 0 à $V_{DD}$. La première tension différentielle d'équilibre est supérieure à 0 quand le transistor PM8 est bloqué, la grille du transistor PM4 étant moins large que la grille du transistor PM2. Le transistor PM8 est bloqué quand la tension de sortie $V_{OUT}$ est égale à 0, le transistor PM9 étant alors passant et la grille du transistor PM8 portée à la tension $V_{DD}$. La deuxième tension différentielle d'équilibre est égale ici à 0 quand le transistor PM8 est passant, en raison de la relation (1) ci-dessus. Le transistor PM8 est passant quand la tension de sortie $V_{OUT}$ est égale à $V_{DD}$, le transistor PM10 étant alors passant (noeud n7 à 0) et le noeud n6 connecté au noeud n1.

Ainsi, le comparateur 35-2 présente l'avantage d'offrir une hystérésis de commutation, c'est-à-dire une tension différentielle $V_{REF}$-$V_{DD}$ de commutation à l'état haut ($V_{OUT}$ = $V_{DD}$) différente de la tension différentielle de commutation à l'état bas ($V_{OUT}$ = O). La tension de sortie $V_{OUT}$, une fois passée à l'état haut, demeure stable tant que la tension $V_{DD}$ continue de descendre.

Dans le comparateur 35-3 de la figure 8, la porte inverseuse IV2 est remplacée par une porte inverseuse IV2' ayant un temps de commutation plus long et les transistors NM11 et NM12 sont ajoutés.

Lorsque la tension de sortie $V_{OUT}$ est égale à $V_{DD}$, le transistor PM9 est bloqué et le transistor PM10 est passant. Le noeud n1 est connecté au noeud n6. Les transistors ballast PM2, PM4 et PM8 ont la même tension de grille.

Lorsque la tension $V_{OUT}$ passe ensuite de $V_{DD}$ à 0, le transistor PM9 devient passant et le transistor PM10 reste passant tant que la sortie de la porte inverseuse IV2' n'est pas à $V_{DD}$. La tension $V_{DD}$ est donc ramenée sur le noeud n1 de la branche d'entrée du comparateur pendant la période de transition. Le résultat est que l'on force encore plus la sortie $V_{OUT}$ vers zéro tant que le comparateur n'est pas stabilisé. Les transistors NM11 et NM12 restent bloqués pendant cette période de transition.

Lorsque la tension de sortie $V_{OUT}$ passe de 0 à $V_{DD}$, la stabilisation du comparateur pendant la période de transition est assurée par les transistors NM11 et NM12. Le transistor NM12 devient passant et le transistor NM11 reste passant tant que la sortie de la porte IV2' ne passe pas à 0. Les deux transistors NM11 et NM12 étant passants, le noeud n6 qui commande le transistor PM8 est forcé à 0 et le transistor PM8 est passant. Les transistors PM9 et PM10 restent bloqués pendant cette période de transition.

Le comparateur 35-3 offre l'avantage d'une grande stabilité lorsque la tension différentielle évolue très lentement, comme cela peut être le cas lorsque le condensateur 25 de la figure 3 présente une forte capacité électrique.

Les comparateurs 35-2, 35-3 ayant pour des raisons pratiques une tension de sortie inverse de celle du comparateur 35 décrit plus haut, une porte inverseuse peut être ajoutée entre la sortie de ces comparateurs et la bascule 40 de la figure 3. Comme autre solution, la sortie inversée /Q de la bascule 40 peut être connectée à la bascule 41 plutôt que sa sortie Q.

En pratique, les comparateurs 35-2, 35-3 sont susceptibles de diverses variantes de réalisation qui sont à la portée de l'homme de l'art en appliquant les principes qui viennent d'être décrits. Ils sont également susceptibles de diverses applications autres que celle correspondant à la mise en oeuvre du lecteur de carte à puce représenté sur la figure 3, et constituent ainsi une invention indépendante.

## Revendications

1. Lecteur (20, 60) de carte à puce comprenant un logement de réception d'une carte à puce, un microprocesseur (30), des moyens (12) de connexion du microprocesseur à une carte à puce (5) insérée dans le logement, une source de tension (21), et des moyens pour ne pas délivrer au microprocesseur la tension fournie par la source de tension lorsque aucune carte à puce ne se trouve dans le logement,

   **caractérisé en ce que** les moyens pour ne pas délivrer au microprocesseur la tension fournie par la source de tension (21) comprennent un premier moyen interrupteur (24) du type normalement ouvert, interposé entre la source de tension (21) et une borne d'alimentation (31) du microprocesseur, ledit moyen interrupteur étant agencé pour se fermer lorsqu'une carte se trouve en fin de course dans le logement et s'ouvrir lorsque la carte n'est plus en fin de course dans le logement.

2. Lecteur (20, 60) selon la revendication 1, dans lequel le microprocesseur comprend :

   - des moyens (35, 36, 37, 38, 39, 61, 62) pour détecter l'ouverture du moyen interrupteur (24),
   - des moyens (40, 41, 44, 45, 46, 47) pour mettre fin à une communication avec une carte à puce en cas d'ouverture du moyen interrupteur (24) au cours d'une telle communication,
   - un condensateur (25) pour maintenir la tension .d'alimentation ($V_{DD}$) du microprocesseur au-dessus d'un seuil déterminé (V2) lorsque le moyen interrupteur passe de l'état fermé à l'état ouvert, au moins pendant le temps ($T_{SC}$) nécessaire au microprocesseur pour mettre fin à une communication en cours.

3. Lecteur (20) selon la revendication 2, dans lequel les moyens pour détecter l'ouverture du moyen interrupteur comprennent un comparateur (35) agencé pour comparer la tension d'alimentation ($V_{DD}$) du microprocesseur avec une tension de référence ($V_{REF}$).

4. Lecteur selon la revendication 3, dans lequel ladite tension de référence ($V_{REF}$) est générée au moyen de la tension ($V_E$) délivrée par la source de tension (21), sans passer par le moyen interrupteur (24).

5. Lecteur selon la revendication 4, dans lequel la tension de référence ($V_{REF}$) est délivrée par un diviseur de tension (37, 38) alimenté par la source de tension (21).

6. Lecteur selon la revendication 5, dans lequel le diviseur de tension (37, 38) est connecté à la masse par un interrupteur (39) se trouvant dans l'état ouvert lorsque le microprocesseur n'est pas alimenté.

7. Lecteur selon l'une des revendications 3 à 6, dans lequel les moyens pour mettre fin à une communication comprennent des moyens (41, 45, 46) pour générer un signal d'interruption lorsque la sortie du comparateur (35) change de valeur suite à l'ouverture du moyen interrupteur (24).

8. Lecteur (60) selon la revendication 2, dans lequel des moyens pour détecter une ouverture du premier moyen interrupteur (24) comprennent un deuxième moyen interrupteur (61) agencé pour se fermer lorsqu'une carte est en fin de course dans le logement et s'ouvrir lorsque la carte n'est plus en fin de course dans le logement.

9. Lecteur selon la revendication 8, dans lequel le deuxième moyen interrupteur (61) a une première borne connectée à la source de tension, la deuxième borne étant surveillée par le microprocesseur.

10. Lecteur selon l'une des revendications 8 et 9, dans lequel les moyens pour mettre fin à une communication comprennent des moyens (62, 40, 41, 45, 46) pour générer un signal d'interruption lorsque le deuxième moyen interrupteur (61) passe de l'état fermé à l'état ouvert.

11. Lecteur selon l'une des revendications précédentes, dans lequel la source de tension est une pile électrique (21).

12. Lecteur (20) selon la revendication 3, comprenant un comparateur (35-2, 35-3) comportant deux branches d'entrée comprenant chacune au moins un transistor ballast (PM2, PM4) et un transistor de commande (NM1, NM3) pour recevoir respectivement ladite tension d'alimentation ($V_{DD}$) et ladite tension de référence ($V_{REF}$), **caractérisé en ce que** le comparateur comprend :

   - un transistor ballast supplémentaire (PM8) connecté en parallèle avec un transistor ballast (PM4) de l'une des branches d'entrée,
   - des moyens (PM10, IV2, IV2') pour connecter l'entrée de commande du transistor ballast supplémentaire (PM8) aux entrées de commande des autres transistors ballast lorsque la tension de sortie ($V_{OUT}$) du comparateur est dans un premier état ($V_{DD}$), et
   - des moyens (PM9) pour bloquer le transistor ballast supplémentaire (PM8), lorsque la tension de sortie ($V_{OUT}$) du comparateur est dans un second état (GND),

   de telle sorte que le comparateur présente une hystérésis de commutation fonction de l'état de sa sortie.

13. Lecteur selon la revendication 12, dans lequel le comparateur (35-3) comprend en outre des moyens (IV2' NM11, NM12) pour rendre passant le transistor ballast supplémentaire (PM8) pendant une période de transition où la tension de sortie ($V_{OUT}$) du comparateur passe du second état (GND) au premier état ($V_{DD}$).

14. Lecteur selon l'une des revendications 12 et 13, dans lequel le comparateur (35-3) comprend en outre des moyens (IV2', PM9, PM10) pour bloquer les transistors ballast (PM2, PM4, PM8) pendant une période de transition où la tension de sortie ($V_{OUT}$) du comparateur passe du premier état ($V_{DD}$) au second état (GND).

15. Lecteur selon l'une des revendications 13 ou 14, dans lequel les moyens pour bloquer ou pour rendre passant le transistor ballast supplémentaire pendant une période de transition comprennent des moyens (IV2') pour retarder pendant ladite période de transition l'application au transistor ballast supplémentaire (PM8) de signaux de commande qui dépendent du nouvel état de la sortie du comparateur.

**Claims**

1. A chip card reader (20, 60) comprising a housing for receiving a chip card, a microprocessor (30), means (12) for connecting the microprocessor to a chip card (5) inserted into the housing, a voltage source (21) and means for not delivering to the microprocessor the voltage provided by the voltage source when no chip card is disposed in the housing,
   **characterised in that** the means for not delivering to the microprocessor the voltage provided by the voltage source (21) comprise a first switch means (24) of the normally open type interposed between the voltage source (21) and a power supply terminal (31) of the microprocessor, said switch means being arranged to close when a card is at the end of its travel movement in the housing and to open when the card is no longer at the end of its travel movement in the housing.

2. A reader (20, 60) according to claim 1 wherein the microprocessor comprises:

   - means (35, 36, 37, 38, 39, 61, 62) for detecting opening of the switch means (24),
   - means (40, 41, 44, 45, 46, 47) for terminating a communication between a chip card in the event of opening of the switch means (24) in the course of such a communication, and

- a capacitor (25) for maintaining the supply voltage ($V_{DD}$) of the microprocessor above a given threshold (V2) when the switch means goes from the closed state to the open state at least during the period of time ($T_{SC}$) necessary for the microprocessor to terminate such a communication which is taking place.

3. A reader (20) according to claim 2 wherein the means for detecting opening of the switch means comprise a comparator (35) arranged to compare the supply voltage ($V_{DD}$) of the microprocessor to a reference voltage ($V_{REF}$).

4. A reader according to claim 3 wherein said reference voltage ($V_{REF}$) is generated by means of the voltage ($V_E$) delivered by the voltage source (21) without passing by way of the switch means (24).

5. A reader according to claim 4 wherein the reference voltage ($V_{REF}$) is delivered by a voltage divider (37, 38) supplied by the voltage source (21).

6. A reader according to claim 5 wherein the voltage divider (37, 38) is connected to earth by a switch (39) which is in the open state when the microprocessor is not supplied with power.

7. A reader according to one of claims 3 to 6 wherein the means for terminating a communication comprise means (41, 45, 46) for generating an interrupt signal when the output of the comparator (35) changes in value following opening of the switch means (24).

8. A reader (60) according to claim 2 wherein means for detecting opening of the first switch means (24) comprise a second switch means (61) arranged to close when a card is at the end of its travel movement in the housing and to open when the card is no longer at the end of its travel movement in the housing.

9. A reader according to claim 8 wherein the second switch means (61) has a first terminal connected to the voltage source, the second terminal being monitored by the microprocessor.

10. A reader according to one of claims 8 and 9 wherein the means for terminating a communication comprise means (62, 40, 41, 45, 46) for generating an interrupt signal when the second switch means (61) goes from the closed state to the open state.

11. A reader according to one of the preceding claims wherein the voltage source is an electric battery (21).

12. A comparator (20) according to claim 3 comprising a comparator (35-2, 35-3) comprising two input arms each comprising at least one ballast transistor (PM2, PM4) and a control transistor (NM1, NM3) for respectively receiving said power supply voltage ($V_{DD}$) and said reference voltage ($V_{REF}$), **characterised in that** the comparator comprises:

- a supplementary ballast transistor (PM8) connected in parallel with a ballast transistor (PM4) of one of the input arms,
- means (PM10, IV2, IV2') for connecting the control input of the supplementary ballast transistor (PM8) to the control inputs of the other ballast transistors when the output voltage ($V_{OUT}$) of the comparator is in a first state ($V_{DD}$), and
- means (PM9) for blocking the supplementary ballast transistor (PM8) when the output voltage ($V_{OUT}$) of the comparator is in a second state (GND),

in such a way that the comparator has a switching hysteresis dependent on the state of its output.

13. A reader according to claim 12 wherein the comparator (35-3) further comprises means (IV2', NM11, NM12) for making the supplementary ballast transistor (PM8) conducting during a transitional period in which the output voltage ($V_{OUT}$) of the comparator goes from the second state (GND) to the first state ($V_{DD}$).

14. A reader according to one of claims 12 and 13 wherein the comparator (35-3) further comprises means (IV2', PM9, PM10) for making the supplementary ballast transistors (PM2, PM4, PM8) non-conducting during a transitional period in which the output voltage ($V_{OUT}$) of the comparator goes from the first state ($V_{DD}$) to the second state (GND).

15. A reader according to one of claims 13 and 14 wherein the means for making the supplementary transistor non-conducting or conducting during a transitional period comprise means (IV2') for retarding during said transitional period the application to the supplementary ballast transistor (PM8) of control signals which depend on the new state of the output of the comparator.

**Patentansprüche**

1. Leser (20, 60) einer Chipkarte, umfassend einen Sitz zur Aufnahme einer Chipkarte, einen Mikroprozessor (30), Mittel (12) zum Anschluss des Mikroprozessors an eine Chipkarte (5), die in den Aufnahmesitz eingeführt wird, eine Spannungsquelle (21) und Mittel, um an den Mikroprozessor keine von der Spannungsquelle bereitgestellte Spannung zu liefern, wenn sich keine Karte im Sitz befindet,
**dadurch gekennzeichnet, dass**
die Mittel, um an den Mikroprozessor keine von der Spannungsquelle (21) bereitgestellte Spannung zu liefern, ein erstes Unterbrechermittel (24) vom normaler Weise geöffneten Typ umfassen, welches zwischen der Spannungsquelle (21) und einem Versorgungsanschluss (31) des Mikroprozessors angeordnet ist, wobei das genannte Unterbrechermittel betätigt wird, um sich zu schließen, wenn sich eine Karte am Ablaufende im Sitz befindet, und um sich zu öffnen, wenn die Karte am Ablaufende nicht mehr im Sitz vorliegt.

2. Leser (20, 60) gemäß Anspruch 1, worin der Mikroprozessor umfasst:

   - Mittel (35, 36, 37, 38, 39; 61, 62) zum Nachweis der Öffnung des Unterbrechermittels (24),

   - Mittel (40, 41, 44, 45, 46, 47), um eine Kommunikation mit einer Chipkarte im Fall der Öffnung des Unterbrechermittels (24) im Laufe einer solchen Kommunikation zu beenden,

   - einen Kondensator (25) zur Aufrechterhaltung der Versorgungsspannung ($V_{DD}$) des Mikroprozessors oberhalb einer bestimmten Schwelle (V2), wenn das Unterbrechermittel vom geschlossenen zum geöffneten Zustand geht, zumindest während der Zeit ($T_{SC}$), die der Mikroprozessor braucht, um einen Kommunikationsablauf zu beenden.

3. Leser (20) gemäß Anspruch 2, worin die Mittel zum Nachweis der Öffnung des Unterbrechermittels einen Vergleicher (35) umfassen, der betätigt wird, um die Versorgungsspannung ($V_{DD}$) des Mikroprozessors mit einer Referenzspannung ($V_{REF}$) zu vergleichen.

4. Leser gemäß Anspruch 3, worin die genannte Referenzspannung ($V_{REF}$) durch die von der Spannungsquelle (21) gelieferte Spannung ($V_E$) erzeugt wird, ohne das Unterbrechermittel (24) zu durchlaufen.

5. Leser gemäß Anspruch 4, worin die Referenzspannung ($V_{REF}$) von einem Spannungsteiler (37,38) geliefert wird, der durch die Spannungsquelle (21) versorgt wird.

6. Leser gemäß Anspruch 5, worin der Spannungsteiler (37, 38) an die Masse durch einen Unterbrecher (39) angeschlossen ist, der sich im geöffneten Zustand befindet, wenn der Mikroprozessor nicht versorgt wird.

7. Leser gemäß einem der Ansprüche 3 bis 6, worin die Mittel zur Beendigung einer Kommunikation Mittel (41, 45, 46) umfassen, um ein Unterbrechungssignal zu erzeugen, wenn sich der Ausgang des Vergleichers (35) im Wert verändert, der auf die Öffnung des Unterbrechermittels (24) folgt.

8. Leser (60) gemäß Anspruch 2, worin die Mittel zum Nachweis einer Öffnung des ersten Unterbrechermittels (24) ein zweites Unterbrechermittel (61) umfassen, das betätigt wird, um sich zu schließen, wenn eine Karte am Ablaufende im Sitz vorliegt, und um sich zu öffnen, wenn die Karte am Ablaufende nicht mehr im Sitz vorliegt.

9. Leser gemäß Anspruch 8, worin das zweite Unterbrechermittel (61) einen ersten Anschluss aufweist, der an die Spannungsquelle angeschlossen ist, wobei der zweite Anschluss vom Mikroprozessor überwacht wird.

10. Leser gemäß einem der Ansprüche 8 und 9, worin die Mittel zur Beendigung einer Kommunikation Mittel (62, 40, 41, 45, 46) umfassen, um ein Unterbrechungssignal zu erzeugen, wenn das zweite Unterbrechermittel (61) vom geschlossenen zum geöffneten Zustand geht.

**11.** Leser gemäß einem der vorhergehenden Ansprüche, worin die Spannungsquelle eine elektrische Batterie (21) ist.

**12.** Leser (20) gemäß Anspruch 3, umfassend einen Vergleicher (35-2, 35-3), der zwei Eingangszweige aufweist, von denen jeder mindestens einen Ballasttransistor (PM2, PM4) und einen Befehlstransistor (NM1, NM3) umfasst, um jeweils die genannte Versorgungsspannung (VDD) und die genannte Referenzspannung ($V_{REF}$) aufzunehmen, **dadurch gekennzeichnet, dass** der Vergleicher umfasst:

- einen zusätzlichen Ballasttransistor (PM8), der in Parallelschaltung an einen Ballasttransistor (PM4) des einen der Eingangszweige angeschlossen ist,

- Mittel (PM10, IV2, IV2') zum Anschluss des Eingangsbefehls des zusätzlichen Ballasttransistors (PM8) an die Befehlseingänge der weiteren Ballasttransistoren, wenn die Ausgangsspannung ($V_{OUT}$) des Vergleichers in einem ersten Zustand ($V_{DD}$) vorliegt, und

- Mittel (PM9) zur Blockierung des zusätzlichen Ballasttransistors (PM8), wenn die Ausgangsspannung ($V_{OUT}$) des Vergleichers in einem zweiten Zustand (GND) vorliegt, und zwar so, dass der Vergleicher eine Hysteresis der Funktionsvertauschung des Zustands seines Ausgangs aufweist.

**13.** Leser gemäß Anspruch 12, worin der Vergleicher (35-3) außerdem Mittel (IV2', NM11, NM12) umfasst, um den zusätzlichen Ballasttransistor (PM8) während einer Übergangsdauer durchgängig zu machen, wo die Ausgangsspannung ($V_{OUT}$) des Vergleichers vom zweiten (GND) zum ersten Zustand ($V_{DD}$) geht.

**14.** Leser gemäß einem der Ansprüche 12 und 13, worin der Vergleicher (35-3) außerdem Mittel (IV2', PM9, PM10) umfasst, um die Ballasttransistoren (PM2, PM4, PM8) während einer Übergangsdauer zu blockieren, wo die Ausgangsspannung ($V_{OUT}$) des Vergleichers vom ersten ($V_{DD}$) zum zweiten Zustand (GND) geht.

**15.** Leser gemäß einem der Ansprüche 13 oder 14, worin die Mittel zum Blockieren oder Durchgängigmachen des zusätzlichen Ballasttransistors während einer Übergangsdauer Mittel (IV2') umfassen, um während der genannten Übergangsdauer die Anwendung von Befehlssignalen, die vom neuen Zustand des Vergleichsausgangs abhängen, an den zusätzlichen Ballasttransistor (PM8) zu verzögern.

**FIG.1**

**FIG.2**

**FIG.3**

EP 1 200 927 B1

FIG.4A

FIG.4B

FIG.4C

FIG.4D

FIG.4E

FIG.4F

**FIG.5**

**FIG.6**

**FIG.7**

**FIG.8**